(19) Europäisches Patentamt
European Patent Office
Office européen des brevets

(11) Veröffentlichungsnummer: **0 419 801 A1**

# (12) EUROPÄISCHE PATENTANMELDUNG

(21) Anmeldenummer: **90114410.5**

(22) Anmeldetag: **27.07.90**

(51) Int. Cl.5: **C08L 27/06**, C08K 5/3432, C08K 5/09, //(C08L27/06,79:02)

(30) Priorität: **26.09.89 DE 3932049**

(43) Veröffentlichungstag der Anmeldung: **03.04.91 Patentblatt 91/14**

(84) Benannte Vertragsstaaten: **BE DE ES FR GB IT NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Hildebrand, Thomas, Dr.**
**Konradstrasse 28**
**W-4600 Dortmund 70(DE)**
Erfinder: **Kemper, Bruno, Dr.**
**Wieselweg 16**
**W-4358 Haltern(DE)**

## (54) Dihydropyridine als Costabilisatoren für Formmassen auf Basis von Polymerisaten des Vinylchlorids.

(57)

1. Stabilisatormischungen, Verwendung derselben und damit stabilisierte Formmassen und Formkörper.
2.1 Für die bisher bekannten physiologisch einwandfreien Stabilisatorsysteme für thermoplastische Formmassen, vorzugsweise auf der Basis von Polymerisaten des Vinylchlorids, mit Polyoxazolinen als Primärstabilisatoren existieren zur Zeit noch keine gut wirksamen Costabilisatoren.
2.2 Die erfindungsgemäßen Costabilisatoren auf Basis von Dihydropyridinen werden neben physiologisch einwandfreien Primärstabilisatoren, wie Polyoxazolinen und Zinkverbindungen, erfolgreich eingesetzt.
2.3 Stabilisiert werden vorzugsweise Hart- und Weich-Polyvinylchlorid.

EP 0 419 801 A1

# DIHYDROPYRIDINE ALS COSTABILISATOREN FÜR FORMMASSEN AUF BASIS VON POLYMERISATEN DES VINYLCHLORIDS

Die Erfindung betrifft harte oder weichgestellte, stabilisierte thermoplastische Formmassen auf Basis von halogenhaltigen Polymeren im besonderen Polyvinylchlorid oder im wesentlichen Vinylchlorid enthaltenden Polymerisaten.

Es ist bekannt, daß chloridhaltige Polymerisate durch die Einwirkung von Wärme, z. B. bei der Verarbeitung, leicht einen Abbau erleiden, der zu unerwünschten Verfärbungen und zu einer Beeinträchtigung der mechanischen Eigenschaften führt. Zur Vermeidung dieses Abbaus werden daher den Polymerisaten vor der Verarbeitung Stabilisatoren zugesetzt. Für Polyvinylchlorid und im wesentlichen Vinylchlorid enthaltende Mischpolymerisate verwendet man besonders Organozinnverbindungen, anorganische und organische Bleisalze, organische Antimonverbindungen oder Kombinationen aus Cadmium- und Bariumcarboxylaten sowie Gemisch aus Zinkseifen und Polyoxazolinen. Diesen sogenannten Primärstabilisatoren werden häufig zur Verbesserung ihrer Wirksamkeit Costabilisatoren zugesetzt. Die Wirkungsweise von Primär- oder Costabilisatoren bzw. ihr Zusammenwirken (Synergismus) ist in der einschlägigen Literatur beschrieben, z. B. in der Publikation von L. I. Nass, "Heat Stabilizers", Kirk-Othmer Encyclopedia of Chemical Technologyl Band 12, 3. Auflage, Seite 225, Verlag John Wiley and Sons, 1980.

Im wesentlichen sind dies Costabilisatoren, die die Anfangsfarbe verbessern bzw. die Endstabilität erhöhen. So werden beispielsweise Epoxyverbindungen, Polyole, organische Phosphite, substituierte Dihydropyridine, 1,3-Diketone oder aber auch Kombinationen aus diesen Verbindungen verwendet.

Für Primärstabilisatoren auf Basis von Polymeren existieren zur Zeit noch keine gut wirksamen Costabilisatoren. Es besteht daher ein Bedarf an Substanzen bzw. Substanzgemischen, die die thermostabilisierende Wirksamkeit polymerer Primärstabilisatoren unterstüt zen bzw. verstärken.

Überraschend wurde nun gefunden, daß Costabilisatoren der Formel

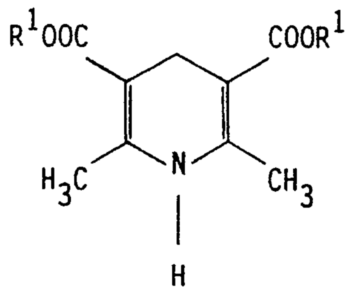

(I),

in der $R^1$ $C_9$-$C_{22}$-Alkyl-, Alkenyl-, Cyclohexyl-, Phenyl- oder substituierte Phenylgruppen bedeutet, die Stabilisierung stark verbessern.

Bevorzugt werden Dihydropyridine mit $R^1$ gleich $C_9$-$C_{14}$-Alkylgruppen verwendet. Hergestellt werden die Dihydropyridine allgemein nach dem Verfahren in Chem. Reviews, 72, 1 (1972), in dem ein Acetoacetat der allgemeinen Formel

$CH_3$ - CO - $CH_2$ - COOR

R = linearer oder verzweigter $C_9$-$C_{22}$-Alkyl-, Alkenyl-, Cyclohexyl-, Phenyl- oder substituierter Phenylgruppe

mit Formaldehyd und Ammoniak, die gegebenenfalls in situ gebildet werden, umgesetzt wird.

Die erfindungsgemäßen Stabilisatorsysteme enthalten neben dem Costabilisator Primärstabilisatoren auf der Basis von Zinkverbindung und Polyoxazolinen. Die Zinkverbindung ist gekennzeichnet durch den Gehalt an einer oder mehreren Verbindungen des Zinks der Formel

$R^2O$ - Zn - $OR^3$ (II),

in der $R^2$ und $R^3$ gleich oder verschieden sein können und für geradkettige oder verzweigte, gegebenenfalls mit Hydroxylgruppen substi tuierte aliphatische Acylgruppen mit 8 bis 21 C-Atomen oder für gegebenenfalls mit Alkylgruppen von 1 bis 22 C-Atomen substituierte Arylgruppen stehen. Bei den $C_8$-$C_{21}$-Carbonsäuren handelt es sich beispielsweise um Benzoesäure, p-tert.-Butylbenzoesäure oder aliphatische Carbonsäuren, insbesondere Octansäure, Dodecansäure, Stearinsäure oder Oelsäure.

Als Zinkverbindungen zu nennen sind vorzugsweise Zinkseifen von Fettsäuren mit 8 bis 36, vorzugsweise 8 bis 22 Kohlenstoffatomen. Insbesondere kommen hier Caprylate, Caprinate, Laurylate, Myristate, Palmitate, Stearate und Behenate in Frage. Ebenfalls sind verwendbar die Salze von verzweigten Fettsäuren, wie 2-Ethylhexansäure, 2-Octyldecansäure oder Tetradecyloctadecansäure, oder auch Hydroxyfettsäuren, wie 9(10)-Hydroxystearinsäure oder 9,10-Dihydroxystearinsäure. Die Zinkseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Zinksalze der Benzoesäure und der substituierten Benzoesäureester, insbesondere der alkylsubstituierten Benzoesäure, in Betracht. Als Phenolate lassen sich einsetzen: Methylphenolate, tert.-Butylphenolate, Nonylphenolate, Dodecylphenolate oder Naphthenate des Zinks.

Die eingesetzten Polyoxazoline werden durch die folgende Formel wiedergegeben:

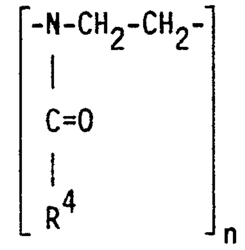

(III),

in der $R^4$ gegebenenfalls unterschiedliche, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 1000 steht (vgl. DE-PS 02 53 985). Verbindungen der Formel II sind beispielsweise Polymethyloxazolin, Polyethyloxazolin, Poly-n-propyloxazolin, Polyisopropyloxazolin, Polyundecyloxazolin oder Polyphenyloxazolin. Ebenfalls als Primärstabilisatoren einsetzbar sind Copolymere aus zwei verschiedenen Alkyl- bzw. Aryl-Oxazolinen mit einem jeweiligen Anteil zwischen 5 % und 95 %. Auch Terpolymere aus drei unterschiedlichen Oxazolinen mit einem Anteil von jeweils 5 bis 95 % sind verwendbar.

Gut geeignet sind auch solche stabilisierten Formmassen, die als Zusatz zu den genannten Primärstabilisatoren (II) und (III) Verbindungen des Zinns, Bleis oder Antimons oder Kombinationen aus Cadmium-, Barium-, Calcium- und Zinkverbindungen enthalten.

Die erfindungsgemäße Stabilisatormischung wird eingesetzt für chlorhaltige Polymerisate. Dabei handelt es sich bevorzugt um Vinylchloridhomopolymere oder -copolymere. Weiterhin bevorzugt sind Suspensions- und Massepolymere sowie Emulsionspolymere. Als Comonomere für die Copolymerisate kommen z. B. in Frage: Vinylacetat, Vinylidenchlorid, Trans-dichlorethan, Ethylen, Propylen, Butylen, Maleinsäure, Acrylsäure, Fumarsäure, Itaconsäure. Weiter geeignete chlorhaltige Polymere sind nachchloriertes PVC und chlorierte Polyolefine, ferner Pfropfpolymerisate von PVC mit Ethylen-Vinylacetat (EVA), Acrylnitril-Butadien-Styrol (ABS) und Methacrylat-Butadien-Styrol (MBS).

Die stabilisierten Formmassen enthalten die Primärstabilisatoren der Formel II bzw. III zweckmäßigerweise in Mengen von 0,02 bis 2,0, insbesondere je 0,05 bis 1,0 Gewichtsprozent, bezogen auf chlorhaltiges Polymer.

Der erfindungsgemäße Costabilisator der Formel I wird zweckmäßigerweise in Mengen von 0,01 bis 2,0, vorzugsweise in Mengen von 0,05 bis 0,1 Gewichtsprozent eingesetzt, bezogen auf chlorhaltiges Polymer.

Den erfindungsgemäßen stabilisierten Formmassen können zusätzlich handelsübliche Costabilisatoren zugefügt werden. Dabei handelt es sich z. B. um Epoxyverbindungen, vorzugsweise epoxidierte Fettsäuren, wie epoxidiertes Sojabohnenöl, Phosphite, insbesondere gemischte Aryl-Alkyl-Phosphite und phenolische Antioxidantien, die bevorzugt in Mengen von 0,05 bis 5,0, besonders 0,1 bis 3,0 Gewichtsprozent, bezogen auf chlorhaltiges Polymer, eingearbeitet werden.

Geeignete herkömmliche Phosphite sind Phosphite der allgemeinen Formeln IV und V

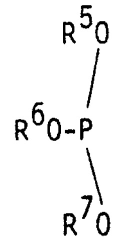

(IV)

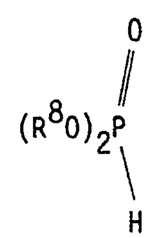

(V)

in denen $R^5$, $R^6$ und $R^7$ gleich oder verschieden sind und $C_6$-$C_{18}$-Alkyl, einen durch $C_1$-$C_9$-Alkyl oder $C_1$-$C_9$-Alkoxy substituierten oder unsubstituierten Phenylrest oder $C_5$-$C_7$-Cycloalkyl bedeuten, und worin $R^8$ $C_5$-$C_{18}$-Alkyl ist.

Bedeuten $R^5$, $R^6$, $R^7$ und $R^8$ $C_6$-$C_{18}$-Alkyl, so handelt es sich dabei z. B. um n-Hexyl, n-Octyl, n-Nonyl, Decyl, Dodecyl, Tetradecyl, Hexadecyl oder Octadecyl. Bevorzugt sind Alkylgruppen mit 8 bis 12 C-Atomen.

Als substituiertes Phenyl bedeuten $R^5$, $R^6$ und $R^7$ beispielsweise Tolyl, Ethylphenyl, Xylyl, Nonyl, Cumyl, Kresyl, 4-Methoxyphenyl, 2,4-Dimethoxyphenyl, Ethoxyphenyl, Butoxyphenyl, p-n-Octylphenyl oder p-n-Nonylphenyl.

Ganz besonders geeignete Phosphite sind Trioctyl-, Tridecyl-, Tridodecyl-, Tritetradecyl-, Tristearyl-, Trioleyl-, Triphenyl-, Trikresyl-, Tris-p-nonylphenyl- oder Tricyclohexylphosphit, und besonders bevorzugt sind die Aryl-Dialkyl- sowie die Alkyl-Diaryl-Phosphite, wie z. B. Phenyldidecyl, Nonylphenyl-didecyl-, (2,4-Di- tert.-butylphenyl)-di-dodecylphosphit, (2,6-Di-tert.-butylphenyl)-di-dodecylphosphit.

Beispiele von Antioxidantien sind alkylierte Monophenole und Hydrochinone, hydroxylierte Thiodiphenylether, 1,4-Alkyliden-Bis-phenole, Benzylverbindungen, Acylaminophenole, Ester oder Amide der β-(3,5-Di-tert.-butyl-4-hydroxyphenyl)-propionsäure und Ester der β-(5-tert.-Butyl-4-hydroxy-3-methylphenyl)-propionsäure.

Bevorzugte Antioxidantien sind alkylierte Monophenole, Alkyliden-Bisphenole und phenylsubstituierte Propionsäureester, insbesondere aber 2,6-Di-tert.-butyl-p-kresol, 2,2-Bis-(4'-hydroxyphenyl)-propan und β-(3,5-Di-tert.-butyl-4-hydroxyphenyl)-propionsäure-n-octadecylester.

Die Verbindung der Formel I kann auch mit weiteren stickstoffhaltigen organisohen Stabilisatoren eingesetzt werden. Beispiele hierfür sind Cyanamid, Dicyandiamid, Guanamine, wie Benzoguanamin, Indole, wie Phenylindol, Paryzole (beispielsweise wie in GB-PS 866 936 beschrieben), Harnstoffe und Thioharnstoffe, wie Monophenylharnstoff und Diphenylthioharnstoff, Aminocrotonsäureester; außerdem β-Diketone, wie Stearylbenzoylmethan, und Polyole, wie Pentaerythrit.

Bei den erfindungsgemäßen stabilisierten Formmassen auf der Basis von Polymeren des Vinylchlorids, die als Costabilisator eine Verbindung der Formel I enthalten, wurde beobachtet, daß diese Verbindung die stabiliserende Wirkung einer Primärstabilisatormischung aus Zinkverbindungen und Polymeren aus der Gruppe der Polyoxazoline in nicht vorhersehbarem Maß verstärken. Der positive Einfluß dieses Costabilisators äußert sich in einer Verbesserung der Anfangsfarbe und in einer Verlängerung der Endstabilität. Zwar werden in der DE-OS 28 44 130 Dihydropyridine als Stabilisatoren für Vinylchloridpolymere eingesetzt, jedoch unterscheiden sich die dort eingesetzten Stabilisatormischungen hinsichtlich der Primärstabilisatoren von den erfindungsgemäßen.

Die Herstellung der erfindungsgemäßen stabilisierten Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester), Weichmacher, Füllstoffe, Lichtstabilisatoren, Farbstoffe oder weitere Costabilisatoren, wie z. B. epoxydierte Fettsäureester.

Die homogene Verteilung der Stabilisatoren im PVC kann z. B. mit Hilfe eines Zweiwalzenmischers bei 150 bis 200 °C erfolgen.

## Herstellung und Prüfung der Walzfelle

Die Wirkung der Stabilisatorkombinationen wurde durch Bestimmung der statischen Thermostabilität von Walzfellen geprüft. Hierzu wurden die Stabilisatorkombinationen und gegebenenfalls Weichmacher und Verarbeitungshilfsmittel mit Polyvinylchlorid 30 Sekunden in einer Labormühle gemischt und anschließend auf einem Doppelwalzwerk bei einer Walztemperatur von 170 °C im Gleichlauf innerhalb von 5 Minuten zu 1 mm starken Walzfellen verarbeitet. Aus den Walzfellen wurden Streifen mit den Maßen 14 x 250 mm geschnitten, die anschließend in einem speziellen Ofen (Metrastat Typ Sigma) bei 180 °C thermisch belastet wurden. Die Probestreifen wurden dabei kontinuierlich aus der Heizzone ausgefahren und zeigen durch die Farbveränderung die Wirkung der Stabilisatoren.

Zur objektiven Beurteilung der Farbveränderungen und zum Vergleich der Probestreifen wurden die Yellowness-Indizes (YI; ASTM-Methode E 313-73) mit einem Farbmeßgerät (LabScan 5100 plus) der Firma Dr. Slevogt & Co. bestimmt und gegen die thermische Belastungszeit aufgetragen. Hohe YI-Werte bedeuten starke Verfärbung und damit geringe Stabilität.

Als Stabilisatoren wurden eingesetzt:

Zn = Zinkstearat

Ba = Bariumstearat
PX = Polyethyloxazolin
PC = Copolymer aus Methyl- und Isopropyloxazolin
TMP = Trimethylolpropan
DHP = Dihydro-dimethyl-bis-(dodecyloxycarbonyl)-pyridin

Aus folgenden Bestandteilen wurden Rezepturen zusammengestellt (GT = Gewichtsteile):

Rezeptur A:
- 100 GT Suspensions-Polyvinylchlorid (K-Wert 70: VESTOLIT S 7054; Hüls AG, Marl)
- 30 GT Dioctylphthalat (VESTINOL AH; Hüls AG, Marl)
- 0,3 GT Montanwachs

Rezeptur B:
- 100 GT Suspensions-Polyvinylchlorid (K-Wert 70; VESTOLIT S 7054; Hüls AG, Marl)
- 30 GT Dioctylphthalat (VESTINOL AH; Hüls AG, Marl)
- 0,3 GT Zinkstearat
- 0,6 GT Bariumstearat

Rezeptur C:
- 100 GT Suspensions-Polyvinylchlorid (K-Wert 70; VESTOLIT S 7054; Hüls AG, Marl)
- 1,0 GT Stearinsäure

Rezeptur D:
- 100 GT Suspensions-Polyvinylchlorid (K-Wert 60; VESTOLIT S 6058; Hüls AG, Marl)
- 1,0 GT Stearinsäure

Rezeptur E:
- 100 GT Suspensions-Polyvinylchlorid (K-Wert 58; VESTOLIT M 5867; Hüls AG, Marl)
- 5,0 GT epoxidiertes Sojabohnenöl (Reoplast 39, Ciba-Geigy AG, Bensheim)

Zur weiteren Erläuterung der Erfindung und zum Nachweis des überraschenden technischen Fortschritts dienen die im folgenden beschriebenen Beispiele.

Zur Herstellung der Polyvinylchlorid-Formmassen wurden die Rezepturen A bis E mit den Stabilisatoren der angegebenen Tabellen versetzt und in der oben beschriebenen Weise zu Probestreifen verarbeitet.

| Vergleich der Thermotestergebnisse mit und ohne Costabilisator | | | | |
|---|---|---|---|---|
| Stabilisatorcompound: Zinkstearat (Zn)<br>Polyethyloxazolin (PX)<br>Copolymerisat aus<br>Methyloxazolin und<br>Isopropyloxazolin (PC)<br>Trimethylolpropan (TMP)<br>und Costabilisator: Dihydropyridin (DHP) | | | | |
| Rezeptur | Zn/PX/DHP/ | | Zn/PC/DHP/ | |
| | ohne TMP | mit TMP | ohne TMP | mit TMP |
| S 7054 Stearinsäure | besser | | besser | |
| S 7054 VESTINOL AH Zn-Stearat Ba-Stearat | besser | | besser | |
| S 7054 VESTINOL AH Montanwachs (entsp. Wachs E) | besser | | besser | |
| S 6058 Stearinsäure | besser | | besser | |
| M 5867 Reoplast 39 | besser | | besser | |

| Zusammensetzung der Stabilisatiorcompounds in Gewichtsteilen (GT) | | | | | |
|---|---|---|---|---|---|
| Stabilisatormischungen | Zn | PX | PC | TMP | DHP |
| Zn/PX | 0,2 | 0,2 | | | |
| Zn/PC | 0,2 | | 0,2 | | |
| Zn/PX/TMP | 0,2 | 0,2 | | 0,5 | |
| Zn/PC/TMP | 0,2 | | 0,2 | 0,5 | |
| Zn/PX/DHP | 0,2 | 0,2 | | | 0,07 |
| Zn/PC/DHP | 0,2 | | 0,2 | | 0,07 |
| Zn/PX/TMP/DHP | 0,2 | 0,2 | | 0,5 | 0,07 |
| Zn/PC/TMP/DHP | 0,2 | | 0,2 | 0,5 | 0,07 |

## Ansprüche

1. Stabilisierte thermoplastische Formmassen auf Basis von halogenhaltigen Polymeren im besonderen Polyvinylchlorid oder im wesentlichen Vinylchlorid enthaltenden Polymerisaten mit Primär-und Costabilisatoren,
dadurch gekennzeichnet,
daß als Costabilisatoren Dihydropyridine der Formel I

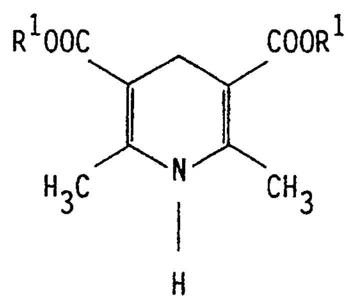

(I),

in der $R^1$ $C_9$-$C_{22}$-Alkyl- oder Alkenyl-, Cyclohexyl-, Phenyl- oder substituierte Phenyl-Gruppen bedeutet und als Primärstabilisatoren Verbindungen des Zinks der Formel
$R^2O$ - Zn - $OR^3$ (II),
in der $R^2$ und $R^3$ gleich oder verschieden sein können und für geradkettige oder verzweigte, gegebenenfalls mit Hydroxylgruppen substituierte aliphatische Acylgruppen mit 8 bis 21 C-Atomen oder für gegebenenfalls mit Alkylgruppen von 1 bis 22 C-Atomen substituierte Arylgruppen stehen,
und zusätzlich wenigstens einem polymeren Primätstabilisator aus der Gruppe der Polyoxazoline der Formel

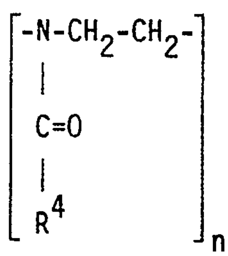

(III),

in der $R^4$ gegebenenfalls unterschiedlich, geradkettige oder verzweigte Alkylreste mit 1 bis 22 C-Atomen oder gegebenenfalls substituierte Cycloalkyl- oder Arylreste, vorzugsweise Alkylreste mit 1 bis 12 C-Atomen, bedeutet, während n für ganze Zahlen von 10 bis 10 000 steht, verwendet werden.
2. Stabilisierte Formmassen nach Anspruch 1

, dadurch gekennzeichnet,
daß die Verbindungen der Formel II bzw. III in Mengen von je 0,02 bis 2,0 sowie die Verbindungen der Formel I in Mengen von 0,01 bis 2,0 Gewichtsprozent, bezogen auf chlorhaltiges Polymere, enthalten.

3. Stabilisierte Formmassen nach Anspruch 1,
dadurch gekennzeichnet,
daß die Verbindungen der Formeln I bis III als Zusatz Stabilisatoren in Form von Verbindungen des Zinns, Bleis oder Antimons oder in Form von Kombinationen aus Cadmium-, Barium-, Calcium-und Zinkverbindungen sowie zusätzliche Costabilisatoren in Form von Verbindungen der Stoffklassen Phosphite, 1,3-Diketone, Polyole, alkylierte Phenole, Cyanamide, Dicyandiamide, Guanamine, Indole, Pyrazole, Harnstoffe, Thioharnstoffe, Monophenylharnstoffe, Diphenylthioharnstoff und Aminocortonsäureester enthalten können.

# Rezeptur:

**100 GT VESTOLIT S 7054**

**1.0 GT Stearinsäure**

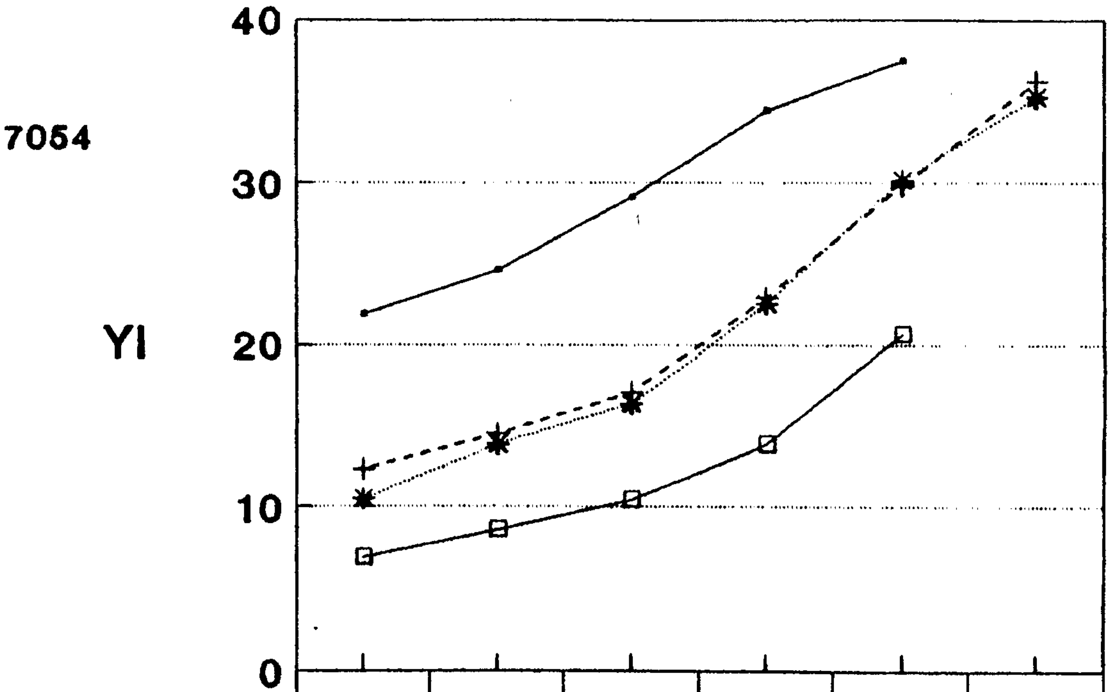


## Stabilisatoren

| Stabilisatoren | | 10 | 15 | 20 | 25 | 30 | 35 |
|---|---|---|---|---|---|---|---|
| Zn/PX | (vgl.) —•— | 22 | 25 | 29 | 34 | 37 | |
| Zn/PX/TMP | (vgl.) --+-- | 12 | 14 | 17 | 23 | 30 | 36 |
| Zn/PX/DHP | * | 10 | 14 | 16 | 23 | 30 | 35 |
| Zn/PX/TMP/DHP | —□— | 7 | 9 | 10 | 14 | 21 | |

YI

**thermische Belastung [min]**

# Rezeptur:

**100 GT VESTOLIT S 7054**

**1.0 GT Stearinsäure**

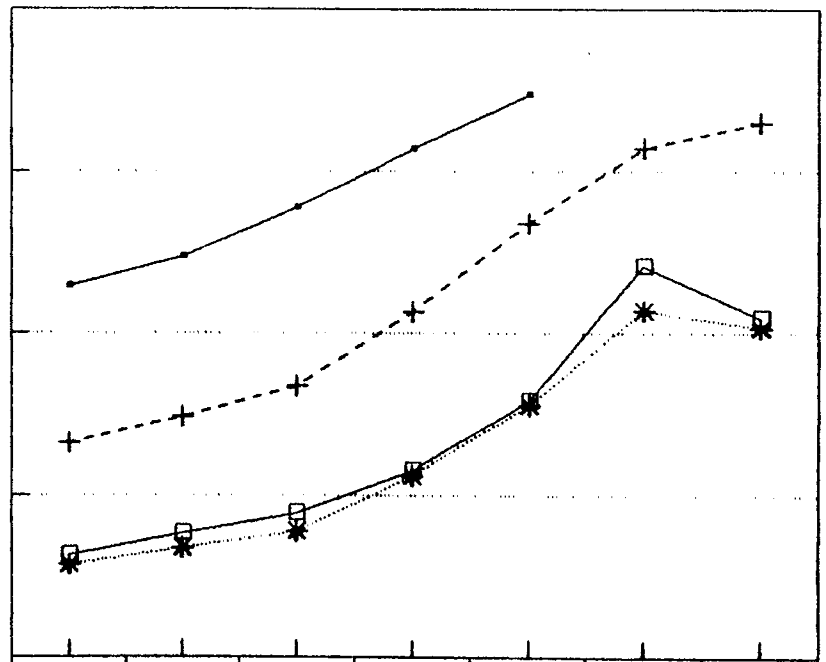


| Stabilisatoren | | | 10 | 15 | 20 | 25 | 30 | 35 | 40 |
|---|---|---|---|---|---|---|---|---|---|
| Zn/PC | (vgl.) | —•— | 23 | 25 | 28 | 31 | 35 | | |
| Zn/PC/TMP | (vgl.) | --+-- | 13 | 15 | 17 | 21 | 27 | 31 | 33 |
| Zn/PC/DHP | | * | 6 | 7 | 8 | 11 | 16 | 21 | 20 |
| Zn/PC/TMP/DHP | | —□— | 6 | 8 | 9 | 12 | 16 | 24 | 21 |

YI

thermische Belastung [min]

## Rezeptur:

100 GT VESTOLIT S 7054
30 GT VESTINOL AH
0.3 GT Zinkstearat
0.6 GT Bariumstearat

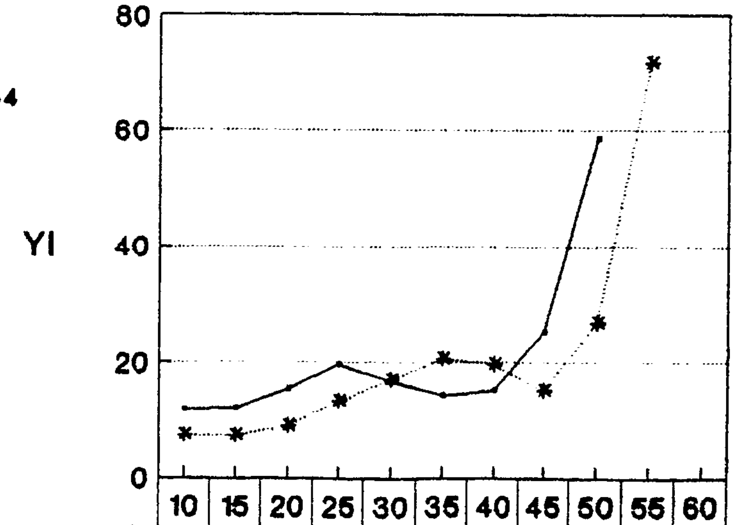


**Stabilisatoren**

| Stabilisatoren | | | 10 | 15 | 20 | 25 | 30 | 35 | 40 | 45 | 50 | 55 | 60 | |
|---|---|---|---|---|---|---|---|---|---|---|---|---|---|---|
| Zn/PC | (vgl.) | —•— | 12 | 12 | 15 | 20 | 17 | 14 | 15 | 25 | 59 | - | - | |
| Zn/PC/TMP | (vgl.) | | 8 | 9 | 9 | 12 | 16 | 16 | 13 | 14 | 33 | 85 | - | YI |
| Zn/PC/DHP | | ·*·· | 7 | 8 | 9 | 13 | 17 | 21 | 20 | 15 | 27 | 72 | - | |
| Zn/PC/TMP/DHP | | | 4 | 5 | 5 | 7 | 9 | 12 | 13 | 13 | 11 | 16 | 34 | |

thermische Belastung [min]

## Rezeptur:

100 GT VESTOLIT S 7054
30 GT VESTINOL AH
0.3 GT Zinkstearat
0.6 GT Bariumstearat

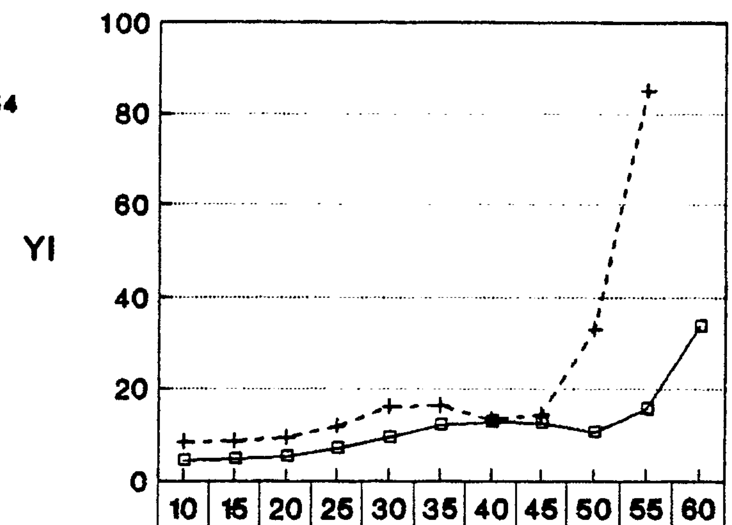


**Stabilisatoren**

| Stabilisatoren | | | 10 | 15 | 20 | 25 | 30 | 35 | 40 | 45 | 50 | 55 | 60 | |
|---|---|---|---|---|---|---|---|---|---|---|---|---|---|---|
| Zn/PC | (vgl.) | | 12 | 12 | 15 | 20 | 17 | 14 | 15 | 25 | 59 | - | - | |
| Zn/PC/TMP | (vgl.) | -+- | 8 | 9 | 9 | 12 | 16 | 16 | 13 | 14 | 33 | 85 | - | YI |
| Zn/PC/DHP | | | 7 | 8 | 9 | 13 | 17 | 21 | 20 | 15 | 27 | 72 | - | |
| Zn/PC/TMP/DHP | | —□— | 4 | 5 | 5 | 7 | 9 | 12 | 13 | 13 | 11 | 16 | 34 | |

thermische Belastung [min]

# Rezeptur:

100 GT VESTOLIT S 7054
30 GT VESTINOL AH
0.3 GT Zinkstearat
0.6 GT Bariumstearat

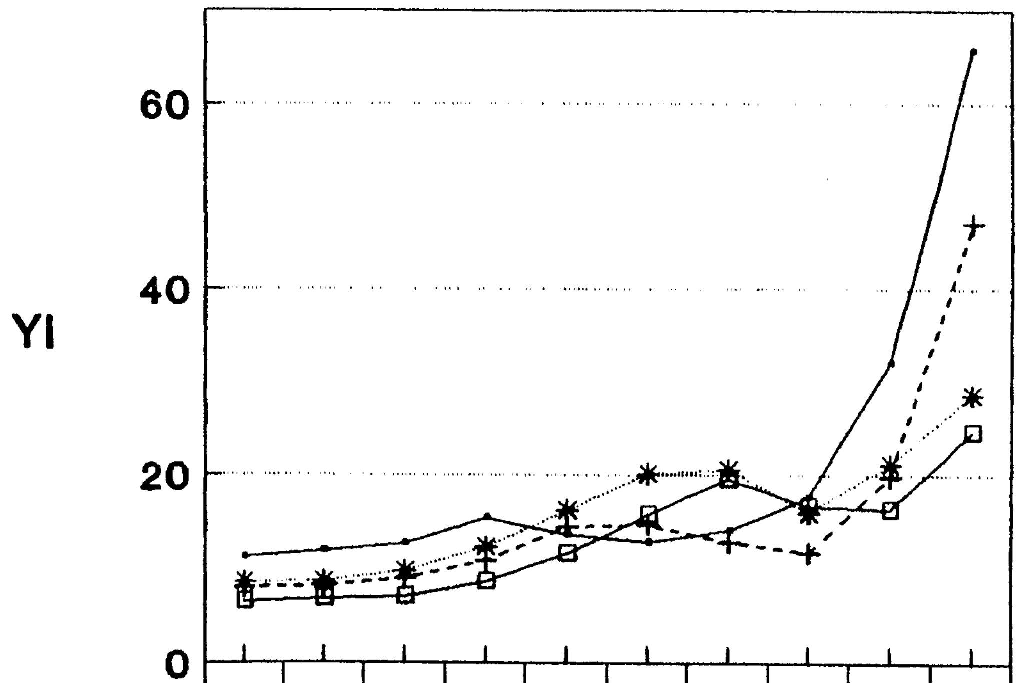


| Stabilisatoren | | | 10 | 15 | 20 | 25 | 30 | 35 | 40 | 45 | 50 | 55 |
|---|---|---|---|---|---|---|---|---|---|---|---|---|
| Zn/PX | (vgl.) | —•— | 11 | 12 | 13 | 15 | 14 | 13 | 14 | 18 | 32 | 66 |
| Zn/PX/TMP | (vgl.) | - -+- - | 8 | 8 | 9 | 11 | 15 | 15 | 13 | 12 | 20 | 47 |
| Zn/PX/DHP | | * | 8 | 9 | 10 | 12 | 16 | 20 | 21 | 16 | 21 | 29 |
| Zn/PX/TMP/DHP | | —□— | 6 | 7 | 7 | 9 | 12 | 16 | 20 | 17 | 16 | 25 |

YI

thermische Belastung [min]

# Rezeptur:

100 GT VESTOLIT S 7054
30 GT VESTINOL AH
0.3 GT Montanwachs

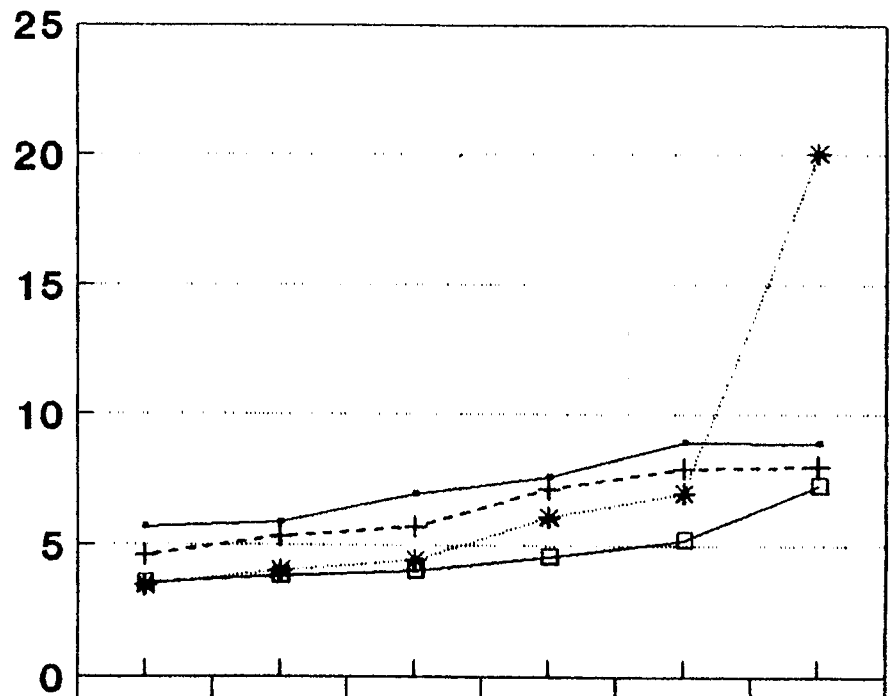


| Stabilisatoren | 10 | 15 | 20 | 25 | 30 | 35 |
|---|---|---|---|---|---|---|
| Zn/PX | 6 | 6 | 7 | 8 | 9 | 9 |
| Zn/PX/TMP | 5 | 5 | 6 | 7 | 8 | 8 |
| Zn/PX/DHP | 3 | 4 | 4 | 6 | 7 | 20 |
| Zn/PX/TMP/DHP | 4 | 4 | 4 | 5 | 5 | 7 |

YI

thermische Belastung [min]

# Rezeptur:

100 GT VESTOLIT S 7054
30 GT VESTINOL AH
0.3 GT Montanwachs

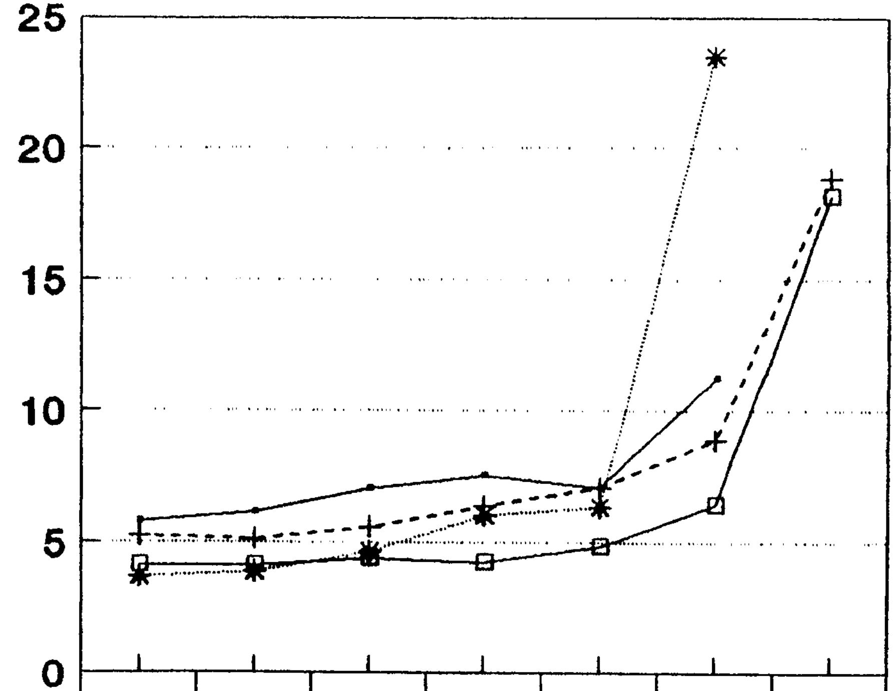


**Stabilisatoren**

| Stabilisatoren | | 10 | 15 | 20 | 25 | 30 | 35 | 40 |
|---|---|---|---|---|---|---|---|---|
| Zn/PC | (vgl.) | 6 | 6 | 7 | 8 | 7 | 11 | - |
| Zn/PC/TMP | (vgl.) | 5 | 5 | 6 | 6 | 7 | 9 | 19 |
| Zn/PC/DHP | | 4 | 4 | 5 | 6 | 6 | 23 | - |
| Zn/PC/TMP/DHP | | 4 | 4 | 4 | 4 | 5 | 6 | 18 |

YI

thermische Belastung [min]

# Rezeptur:

100 GT VESTOLIT S 6058

1.0 GT Stearinsäure

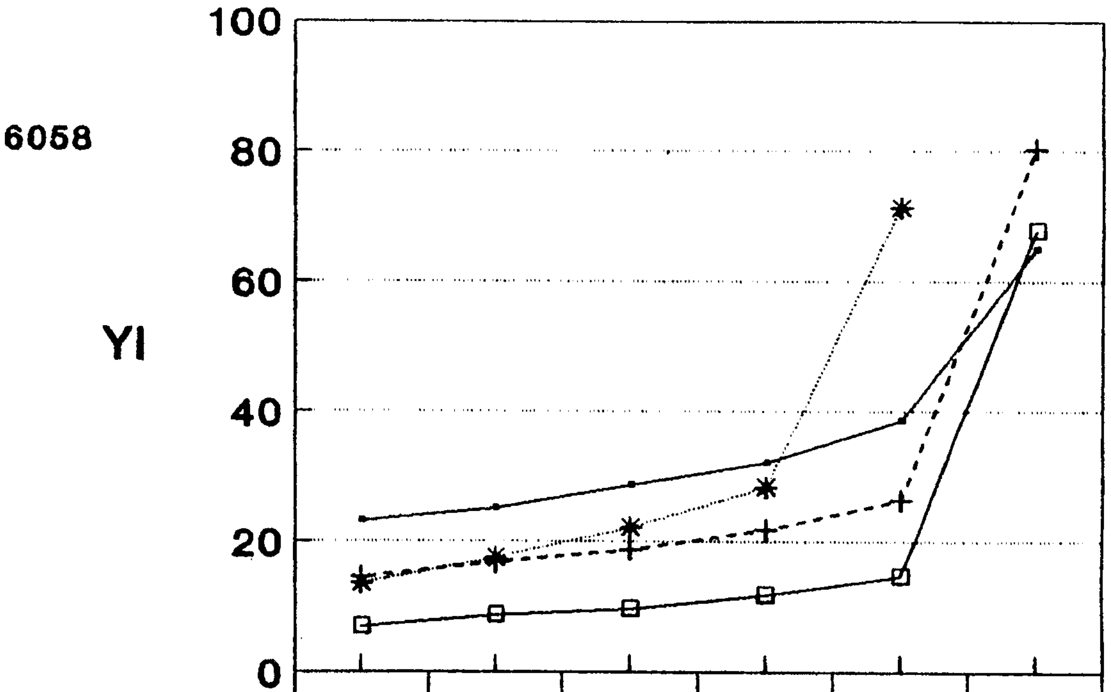


| Stabilisatoren | | | 10 | 15 | 20 | 25 | 30 | 35 |
|---|---|---|---|---|---|---|---|---|
| Zn/PX | (vgl.) | —•— | 23 | 25 | 29 | 32 | 38 | 65 |
| Zn/PX/TMP | (vgl.) | - -+- - | 14 | 17 | 19 | 22 | 26 | 80 |
| Zn/PX/DHP | | * | 13 | 17 | 22 | 28 | 71 | |
| Zn/PX/TMP/DHP | | —□— | 7 | 9 | 10 | 12 | 15 | 68 |

YI

thermische Belastung [min]

# Rezeptur:

100 GT VESTOLIT S 6058

1.0 GT Stearinsäure

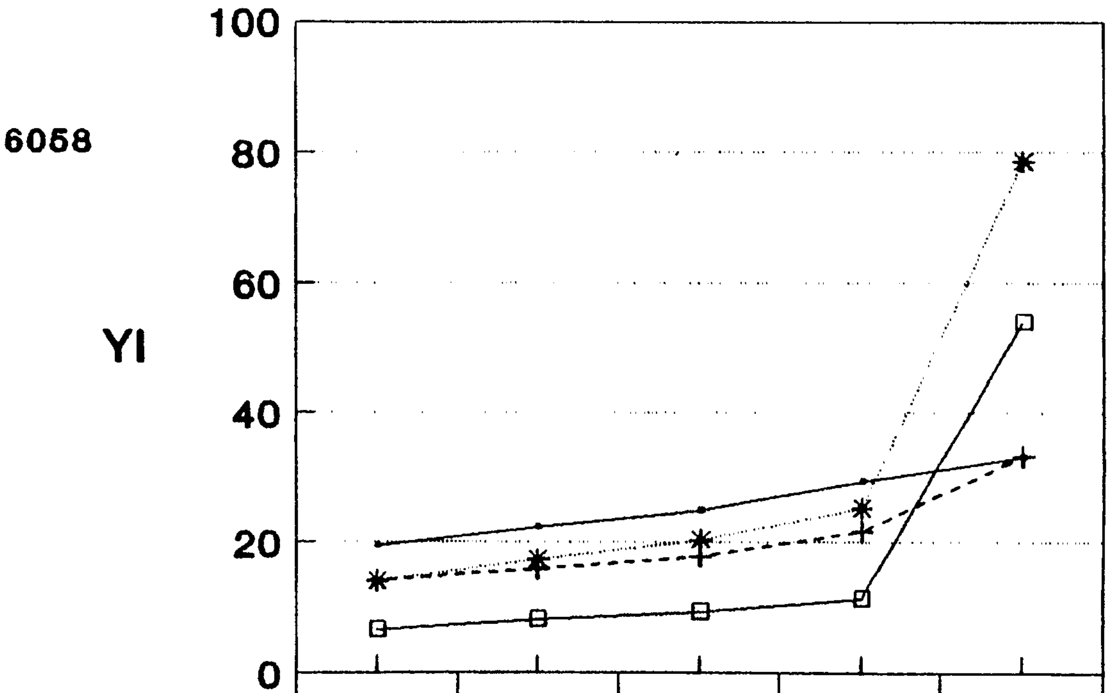


| Stabilisatoren | | 10 | 15 | 20 | 25 | 30 |
|---|---|---|---|---|---|---|
| Zn/PC | (vgl.) | 19 | 22 | 25 | 29 | 33 |
| Zn/PC/TMP | (vgl.) | 14 | 16 | 18 | 22 | 33 |
| Zn/PC/DHP | * | 14 | 17 | 20 | 25 | 79 |
| Zn/PC/TMP/DHP | | 6 | 8 | 9 | 11 | 54 |

YI

thermische Belastung [min]

# Rezeptur:

100 GT VESTOLIT M 5867

5.0 GT Reoplast 39

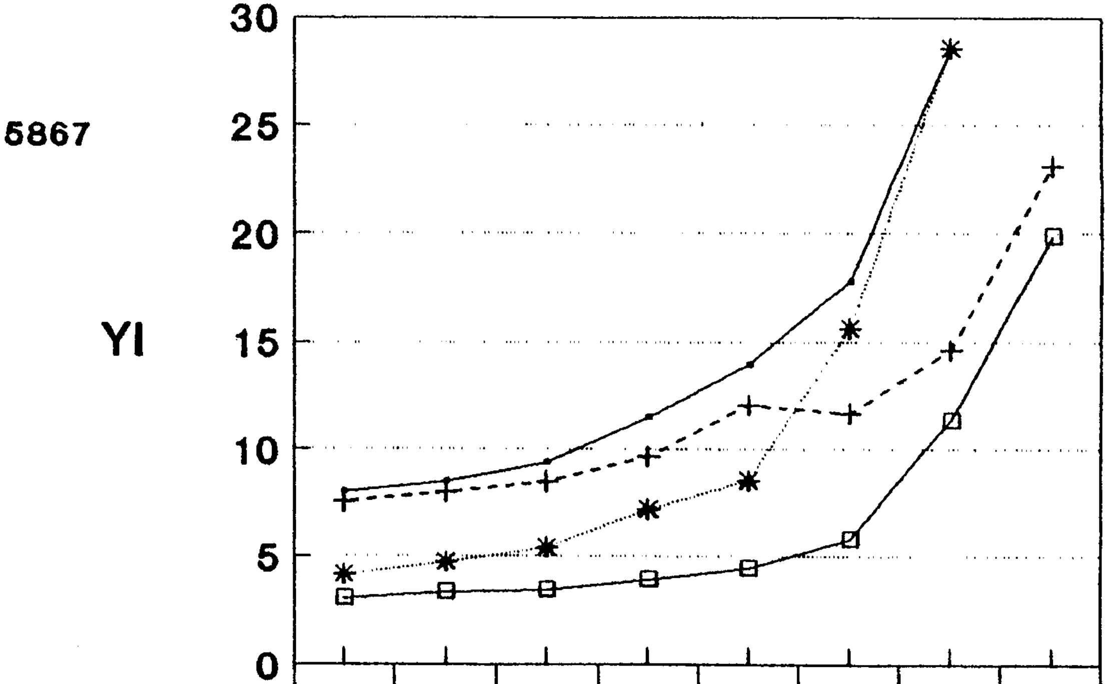


| Stabilisatoren | | 10 | 15 | 20 | 25 | 30 | 35 | 40 | 45 |
|---|---|---|---|---|---|---|---|---|---|
| Zn/PX | (vgl.) —•— | 8 | 8 | 9 | 11 | 14 | 18 | 28 | |
| Zn/PX/TMP | (vgl.) --+-- | 8 | 8 | 8 | 10 | 12 | 12 | 15 | 23 |
| Zn/PX/DHP | * | 4 | 5 | 5 | 7 | 9 | 16 | 29 | |
| Zn/PX/TMP/DHP | —□— | 3 | 3 | 3 | 4 | 4 | 6 | 11 | 20 |

YI

thermische Belastung [min]

# Rezeptur:

100 GT VESTOLIT M 5867

5.0 GT Reoplast 39

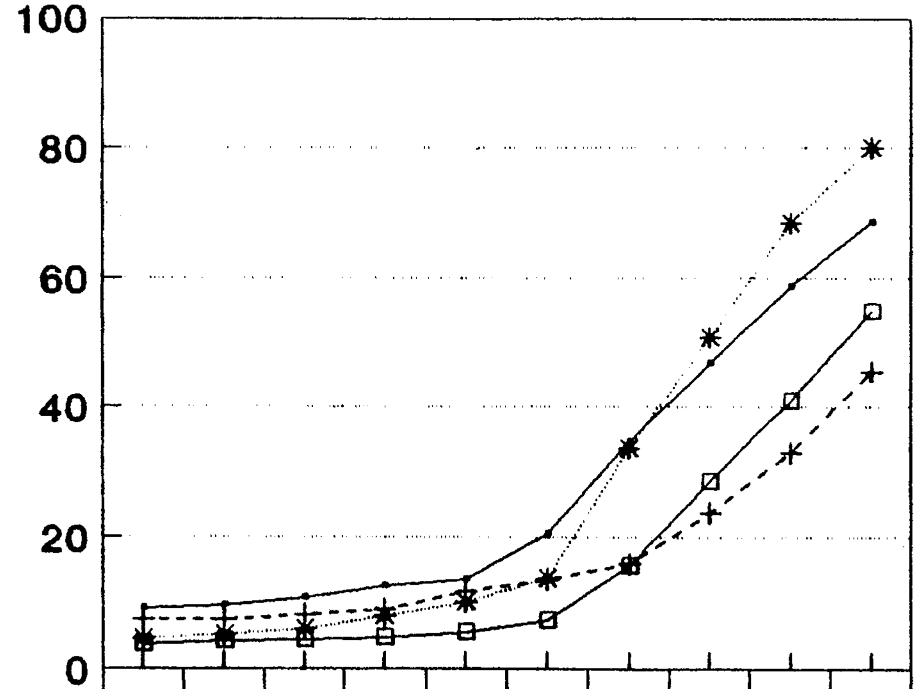


| Stabilisatoren | | | 10 | 15 | 20 | 25 | 30 | 35 | 40 | 45 | 50 | 55 |
|---|---|---|---|---|---|---|---|---|---|---|---|---|
| Zn/PC | (vgl.) | —•— | 9 | 10 | 11 | 13 | 13 | 20 | 34 | 47 | 59 | 69 |
| Zn/PC/TMP | (vgl.) | --+-- | 8 | 8 | 8 | 9 | 12 | 13 | 16 | 24 | 33 | 45 |
| Zn/PC/DHP | | * | 5 | 5 | 6 | 8 | 10 | 14 | 33 | 51 | 69 | 80 |
| Zn/PC/TMP/DHP | | —□— | 4 | 4 | 4 | 5 | 5 | 7 | 16 | 28 | 41 | 55 |

YI

thermische Belastung [min]

Europäisches Patentamt

# EUROPÄISCHER RECHERCHENBERICHT

Nummer der Anmeldung

**EP 90 11 4410**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 253 985 (HÜLS AKTIENGESELLSCHAFT)<br>* Seite 1, Zeile 27 - Seite 5, Zeile 30; Ansprüche 1-6 *<br>- - - | 1-3 | C 08 L 27/06<br>C 08 K 5/3432<br>C 08 K 5/09 //<br>(C 08 L 27/06<br>C 08 L<br>C 08 L 79:02 ) |
| A | AU-B-4 285 578 (LABAZ)<br>* Seite 5, Zeile 11 - Seite 6, Zeile 10 *<br>- - - - - - | 1-3 | |

| RECHERCHIERTE SACHGEBIETE (Int. Cl.5) |
|---|
| C 08 L<br>C 08 K |

Der vorliegende Recherchenbericht wurde für alle Patentansprüche erstellt

| Recherchenort | Abschlußdatum der Recherche | Prüfer |
|---|---|---|
| Den Haag | 10 Dezember 90 | WILSON A.J.D. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument